# EUROPEAN PATENT APPLICATION

(11) **EP 2 629 460 A1**
(43) Date of publication of application: **21.08.2013**
(21) Application number: 11832046.4
(22) Date of filing: 13.10.2011
(51) Int. Cl.: H04L 12/56

(54) **METHOD, SYSTEM AND RELEVANT DEVICE FOR DATA SCHEDULING**

(30) Priority: 14.10.2010 CN 201010512523
(71) Applicant: Huawei Technologies Co., Ltd., Shenzhen, Guangdong 518129 (CN)
(72) Inventor: LUO, Chao, Shenzhen Guangdong 518129 (CN); FANG, Ming, Shenzhen Guangdong 518129 (CN)
(74) Representative: Körber, Martin Hans
(86) International application number: PCT/CN2011/080732
(87) International publication number: WO 2012/048649

(57) **Abstract**

Embodiments of the present invention disclose a data scheduling method and system, and a relevant device, which can effectively improve reusability of a packet radio channel and success rate of packet radio access. The method according to the embodiments of the present invention includes: obtaining, by a terminal, a time characteristic of a downlink radio block and a USF assigned to the terminal, where the time characteristic of the downlink radio block is used to indicate a downlink radio block for which the terminal needs to detect a USF; receiving a downlink radio block, which is sent by a network side device over a downlink PDCH; and when a downlink radio block satisfying the time characteristic is received, determining whether a USF contained in the downlink radio block is the same as the USF assigned to the terminal, and if the same, sending uplink data or signaling over an uplink PDCH corresponding to the downlink PDCH. The embodiments of the present invention further provide a data scheduling system and a relevant device. The embodiments of the present invention can effectively improve reusability of a packet radio channel and success rate of packet radio access.

## Description

This application claims priority to Chinese Patent Application No. 201010512523.6, filed with the Chinese Patent Office on October 14, 2010 and entitled "DATA SCHEDULING METHOD AND SYSTEM, AND RELEVANT DEVICE", which is incorporated herein by reference in its entirety.

### FIELD OF THE INVENTION

The present invention relates to the communications field, and in particular, to a data scheduling method and system, and a relevant device.

### BACKGROUND OF THE INVENTION

With the constant development of network technologies, the general packet radio service (GPRS, General Packet Radio Service) has been widely applied.

In GPRS, all data transmission is completed by establishing temporary block flows (TBF, Temporary Block Flow). One TBF is used to complete transmission of some user data (such as data generated by clicking a link on a web page). For an uplink TBF, because multiple terminals may be multiplexed over the same data traffic channel (PDCH, Packet Data Channel), in order to avoid a conflict, a network must determine, in a specific manner, to which terminal each uplink radio block resource over a PDCH belongs (that is, which terminal may send data on this uplink radio block).

At present, in a GPRS network, an uplink resource assignment manner based on an uplink state flag (USF, Uplink State Flag) is used. Specifically, a network, when establishing an uplink TBF, assigns a USF to a terminal; the terminal monitors radio blocks over a downlink PDCH; if a USF carried in a header of a radio block is the same as the USF assigned to the terminal, the terminal may perform data transmission on one or more subsequent radio blocks of an uplink PDCH corresponding to the downlink PDCH.

In a data scheduling method in the prior art, a network side assigns one unique and fixed USF to each terminal within one TBF period. Within the TBF period, the terminals use the USFs assigned by the network side to them for scheduling of uplink data or signaling.

However, because a USF carries only three information bits, within the same TBF period, there may only be 2³ different USFs on the same PDCH at most. That is, only eight terminals may be multiplexed at most. When a large number of terminals require access at the same time or within the same time segment, the access may be rejected due to insufficient PDCH resources, which may also cause more unnecessary access conflicts and access failures due to repeated access attempts of the terminals, thereby reducing success rate of radio access.

### SUMMARY OF THE INVENTION

Embodiments of the present invention provide a data scheduling method and system, and a relevant device, which can effectively improve reusability of a packet radio channel and success rate of packet radio access.

A data scheduling method provided in an embodiment of the present invention includes: obtaining, by a terminal, a time characteristic of a downlink radio block and an uplink state flag, USF, assigned to the terminal, wherein the time characteristic of the downlink radio block is used to indicate a downlink radio block for which the terminal needs to detect a USF; receiving a downlink radio block, which is sent by a network side device over a downlink data traffic channel, PDCH; and when a downlink radio block satisfying the time characteristic is received, determining whether a USF contained in the downlink radio block is the same as the USF assigned to the terminal, and if yes, sending uplink data or signaling over an uplink PDCH corresponding to the downlink PDCH.

A data scheduling method provided in an embodiment of the present invention includes: respectively sending a corresponding time characteristic of a downlink radio block and an uplink state flag, USF, assigned to each terminal to each terminal, wherein the time characteristic of the downlink radio block is used to indicate a downlink radio block for which each terminal needs to detect a USF, so that each terminal determines, when receiving a downlink radio block satisfying the corresponding time characteristic over a downlink data traffic channel, PDCH, whether a USF contained in the downlink radio block is the same as the USF assigned to the each terminal, and if yes, sends uplink data or signaling over an uplink PDCH corresponding to the downlink PDCH.

A terminal provided in an embodiment of the present invention includes: an information obtaining unit, configured to obtain a time characteristic of a downlink radio block and an uplink state flag, USF, assigned to the terminal, wherein the time characteristic of the downlink radio block is used to indicate a downlink radio block for which the terminal needs to detect a USF; a data receiving unit, configured to receive a downlink radio block, which is sent by a network side device over a downlink data traffic channel, PDCH; a checking unit, configured to determine, when a downlink radio block satisfying the time characteristic is received, whether a USF contained in the downlink radio block is the same as the USF assigned to the terminal; and a data sending unit, configured to send, when the checking unit determines that the USF contained in the downlink radio block is the same as the USF assigned to the terminal, uplink data or signaling over an uplink PDCH corresponding to the downlink PDCH.

A network side device provided in an embodiment of the present invention includes: an information sending unit, configured to respectively send a corresponding time characteristic of a downlink radio block and an uplink state flag, USF, assigned to each terminal to each terminal, wherein the time characteristic of the downlink radio block is used to indicate a downlink radio block for which each terminal needs to detect a USF, so that each terminal determines, when receiving a downlink radio block satisfying the corresponding time characteristic over a downlink data traffic channel, PDCH, whether a USF contained in the downlink radio block is the same as the USF assigned to the each terminal, and if yes, sends uplink data or signaling over an uplink PDCH corresponding to the downlink PDCH.

It can be seen from the above technical solutions that the embodiments of the present invention have the following advantages:
in the embodiments of the present invention, a terminal can obtain a USF and a time characteristic of a downlink radio block. Only when receiving a downlink radio block satisfying the time characteristic, the terminal detects a USF for the downlink radio block, and does not detect USFs for all downlink radio blocks. Therefore, one USF may be assigned to multiple different terminals for use within one TBF period as long as time characteristics assigned to different terminals are different, which can reduce access conflicts and access failures, thereby improving reusability of a packet radio channel and success rate of packet radio access.

### BRIEF DESCRIPTION OF THE DRAWINGS

FIG. 1 is a schematic diagram of a data scheduling method according to an embodiment of the present invention;
FIG. 2 is a schematic diagram of a data scheduling method according to another embodiment of the present invention;
FIG. 3 is a schematic diagram of a data scheduling method according to another embodiment of the present invention;
FIG. 4 is a schematic diagram of a DA assignment manner in a data scheduling method according to the present invention;
FIG. 5 is a schematic diagram of an EDA assignment manner in a data scheduling method according to the present invention;
FIG. 6 is a schematic diagram of a terminal according to an embodiment of the present invention;
FIG. 7 is a schematic diagram of a network side device according to an embodiment of the present invention; and
FIG. 8 is a schematic diagram of a data scheduling system according to an embodiment of the present invention.

### DETAILED DESCRIPTION OF THE EMBODIMENTS

Embodiments of the present invention provide a data scheduling method and system, and a relevant device, which can effectively improve reusability of a packet radio channel and success rate of packet radio access.

In the embodiments of the present invention, a USF assignment mechanism is to perform "time division multiplexing" on a value of a USF. That is, a USF value (0-7) over one PDCH may belong to a terminal 1 in some downlink radio blocks and belong to a terminal 2 in some other downlink radio blocks.

In order to enable more MSs to share one PDCH, in the embodiments of the present invention, the ownership of a USF may be separated by using a radio block as a unit within a 52-multiframe. That is, a USF value may belong to different terminals (up to 12) in 12 radio blocks of a 52-multiframe. Hence, there may be up to 12*8=96 combinations of the USF value and a radio block number within the 52-multiframe. That is, for a solution of a 52-multiframe, 96 terminals may be multiplexed over one PDCH after applying the present invention.

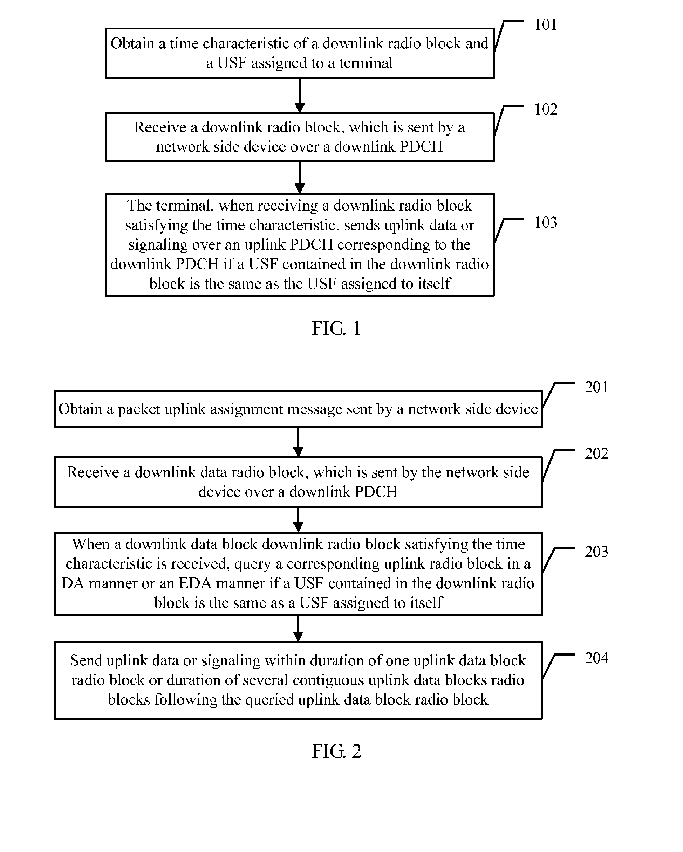

The embodiments of the present invention are described in detail as follows. Referring to FIG. 1, a data scheduling method according to an embodiment of the present invention includes the following steps.

101. Obtain a time characteristic of a downlink radio block and a USF assigned to a terminal.

In this embodiment, the terminal may obtain the time characteristic of the downlink radio block and the USF assigned to the terminal, where the time characteristic indicates a downlink radio block for which the terminal needs to detect a USF, that is, denotes for which downlink radio blocks the terminal needs to detect USFs.

102. Receive a downlink radio block, which is sent by a network side device over a downlink PDCH.

After establishing a TBF connection with the network side device, the terminal may receive the downlink radio block, which is delivered by the network side device over the downlink PDCH.

103. The terminal, when receiving a downlink radio block satisfying the time characteristic, sends uplink data or signaling over an uplink PDCH corresponding to the downlink PDCH if a USF contained in the downlink radio block is the same as the USF assigned to .

The terminal, in a process of receiving the downlink radio block sent by the network side device, when receiving the downlink radio block satisfying the time characteristic, determines whether the USF contained in the downlink radio block is the same as the USF assigned to the terminal, and if yes, sends the uplink data or signaling over the uplink PDCH corresponding to the downlink PDCH.

In this embodiment, a terminal can obtain a USF and a time characteristic of a downlink radio block. Only when receiving a downlink radio block satisfying the time characteristic, the terminal detects a USF for the downlink radio block, and does not detect USFs for all downlink radio blocks. Therefore, one USF may be assigned to multiple different terminals for use within one TBF period as long as time characteristics assigned to different terminals are different, which can reduce access conflicts and access failures, thereby improving reusability of a packet radio channel and success rate of packet radio access.

Referring to FIG. 2, a data scheduling method according to another embodiment of the present invention includes the following steps.

201. Obtain a packet uplink assignment message (Packet Uplink Assignment) sent by a network side device.

In this embodiment, when a terminal establishes a TBF connection with a network side device, the terminal sends a packet channel request (Packet Channel Request) to the network side device. The network side device, after receiving the request, may reply with a packet uplink assignment message, where the packet uplink assignment message contains a USF assigned to the terminal and a time characteristic of a downlink radio block, and the time characteristic is used to indicate a downlink radio block for which the terminal needs to detect a USF, that is, on which downlink radio blocks the USF assigned to the terminal is valid.

In this embodiment, the time characteristic of the downlink radio block may be a block number of a downlink radio block (such as a specific radio block B0, B3, or B8 in a 52-multiframe) or a rule for determining a downlink radio block (for example, in a 52-multiframe, a radio block with a remainder 1 after modulo 5 by a block number, a radio block for which a block number is a multiple of 3, a radio block for which a block number is an odd number, a radio block for which a block number is an even number, and the like).

It should be noted that the packet uplink assignment message may be received from the network side device by the terminal each time establishing a TBF with the network side device. It may be understood that when the TBF is activated or when the network side device needs to reassign a USF or a time characteristic, a packet uplink assignment message or a packet timeslot reconfigure (Packet Timeslot Reconfigure) may be sent again for reconfiguration.

In this embodiment, the network side device may be a packet control unit (PCU, Packet Control Unit), where the packet control unit may be implemented when being integrated in a base transceiver station (BTS, Base Transceiver Station), a base station controller (BSC, Base Station Controller), or another network element, or be implemented independently in an actual application, which is not limited specifically herein.

202. Receive a downlink radio block, which is sent by the network side device over a downlink PDCH.

After the terminal establishes a TBF connection with the network side device, the terminal may receive the downlink radio block, which is delivered by the network side device over the downlink PDCH.

In this embodiment, the downlink radio block may be repeated according to a specific period. For example, for 12 radio blocks in a 52-multiframe, the repetition is performed continuously by using every 12 radio blocks as a period.

203. When a downlink radio block satisfying the time characteristic is received, query a corresponding uplink radio block in a dynamic allocation (DA, Dynamic Allocation) manner or an extended dynamic allocation (EDA, Extended Dynamic Allocation) manner if a USF contained in the downlink radio block is the same as the USF assigned to the terminal.

The terminal, in a process of receiving the downlink radio block sent by the network side device, when receiving the downlink radio block satisfying the time characteristic, determines whether the USF contained in the downlink radio block is the same as the USF assigned to the terminal, and if yes, queries the corresponding uplink radio block in the DA manner or the EDA manner.

For example, the time characteristic is "a radio block with an odd block number in a 52-multiframe", and the terminal detects a USF only when a downlink radio block with an odd block number in a 52-multiframe is received.

In this embodiment, a header of each downlink radio block contains a USF. The terminal, when receiving the downlink radio block satisfying the time characteristic, may extract the USF from the header of the downlink radio block, and then compare the USF with the USF obtained in step 201.

In this embodiment, the terminal, when determining that the USF contained in the downlink radio block is the same as the USF assigned to the terminal, may query an uplink radio block, corresponding to the downlink radio block, over an uplink PDCH in the DA manner or the EDA manner. A specific query process is commonly known to persons skilled in the art and is not limited herein.

204. Send uplink data or signaling on one uplink radio block or several contiguous uplink radio blocks following the queried uplink radio block.

After the corresponding uplink radio block is queried, the terminal may send the uplink data or signaling on one uplink radio block or several contiguous uplink radio blocks following the uplink radio block. A specific process of sending the uplink data or signaling is commonly known to persons skilled in the art and is not limited herein.

In this embodiment, a terminal can obtain a USF and a time characteristic of a downlink radio block. Only when receiving a downlink radio block satisfying the time characteristic, the terminal detects a USF for the downlink radio block, and does not detect USFs for all downlink radio blocks. Therefore, one USF may be assigned to multiple different terminals for use within one TBF period as long as time characteristics assigned to different terminals are different, which can reduce access conflicts and access failures, thereby improving reusability of a packet radio channel and success rate of packet radio access.

In addition, in this embodiment, an uplink radio block may be queried in the DA manner or the EDA manner so as to determine time for the terminal to send uplink data or signaling, which can improve flexibility of the solution.

A data scheduling method of the present invention is described from the perspective of a terminal in the above embodiment. The following describes a data scheduling method of the present invention from the perspective of a network side device, including:
respectively sending, by a network side device, a corresponding time characteristic of a downlink radio block and an uplink state flag USF assigned to each terminal to the each terminal;
where the time characteristic of the downlink radio block is used to indicate a downlink radio block for which the each terminal needs to detect a USF, so that the each terminal determines, when receiving a downlink radio block satisfying the corresponding time characteristic, whether a USF contained in the downlink radio block is the same as the USF assigned to the each terminal, and if yes, the each terminal sends uplink data or signaling over an uplink PDCH corresponding to the downlink PDCH.

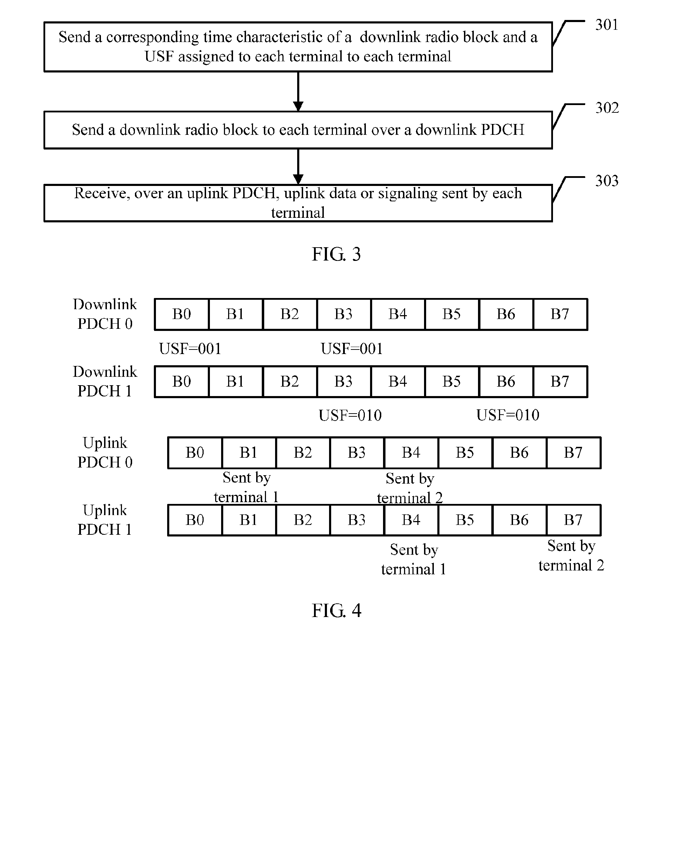

Referring to FIG. 3, a data scheduling method according to another embodiment of the present invention includes the following steps.

301. A network side device sends a corresponding time characteristic of a downlink radio block and a USF assigned to each terminal to each terminal.

In this embodiment, the network side device may send, when establishing a TBF connection with each terminal, the corresponding time characteristic of the downlink radio block and the USF assigned to each terminal to each terminal by using a packet uplink assignment message.

The meaning of the time characteristic is the same as the meaning of the time characteristic described in the above embodiment shown in FIG. 2, and will not be specifically described herein again.

It should be noted that the network side device may assign the same USF to each terminal. For example, a USF assigned to a terminal 1 and a USF assigned to a terminal 2 by the network side device may be the same as long as time characteristics of downlink radio blocks thereof are different, so that different terminals are enabled to use the same USF within different time segments within one TBF period.

In this embodiment, the network side device may deliver a time characteristic in multiple manners. For example, a bitmap having several bits (USF_BLOCK_BITMAP0:bit (X)) may be added following an original USF parameter to indicate a time characteristic of a downlink radio block. For example, 12 bits may be used, where the 12 bits respectively correspond to 12 radio blocks in a 52-multiframe. When the bit is 1, it indicates that the terminal needs to detect a USF for the radio block, and 0 indicates no detection.

It may be understood that, in an actual application, the time characteristic of the downlink radio block may be carried, in more manners, in a message sent by the network side device to the terminal. For example, two new parameters "<USF_BLOCK_DIVISORO:bit(3)>" and "<USF_BLOCK_REMAINDER0:bit(3)>" may be added after an original USF parameter.

The time characteristic is satisfied when a remainder of dividing a block number (B0-B11) in a 52-multiframe by a value of USF_BLOCK_DIVISORO is a value of USF_BLOCK_REMAINDER0.

For example, when a value of USF_BLOCK_DIVISOR0 is "010" (that is "2" in decimal), and USF_BLOCK_REMAINDER0 is "001" (that is, "1" in decimal), it indicates that a downlink radio block for which the remainder of dividing a block number by 2 is 1 satisfies a time characteristic, that is, is an odd block.

When a value of USF_BLOCK_DIVISOR0 is "010" (that is "2" in decimal), and USF_BLOCK_REMAINDER0 is "000" (that is, "0" in decimal), it indicates that a downlink radio block for which the remainder of dividing a block number by 2 is 0 satisfies a time characteristic, that is, is an even block.

In an actual application, a time characteristic of a downlink radio block may be carried in more manners, and no limitation is set herein.

302. Send a downlink radio block to each terminal over a downlink PDCH.

The network side device may send, after establishing a TBF connection with a terminal, a downlink radio block to each terminal over the downlink PDCH, where a header of each downlink radio block contains a USF, so that each terminal detects the USF.

303. Receive, over an uplink PDCH, uplink data or signaling sent by each terminal.

The terminal may send, after determining an uplink radio block according to contents described in the above embodiment shown in FIG. 1 or FIG. 2, uplink data or signaling on a corresponding uplink radio block, and the network side device may receive, over the uplink PDCH, the uplink data or signaling sent by each terminal.

The network side device may assign the same USF to each terminal. For example, a USF assigned to a terminal 1 and a USF assigned to a terminal 2 by the network side device may be the same as long as time characteristics of downlink radio blocks thereof are different, so that different terminals are enabled to use the same USF within different time segments within one TBF period, which can reduce access conflicts and access failures, thereby improving reusability of a packet radio channel and success rate of packet radio access.

For the convenience of understanding, a data scheduling method according to the present invention is described in detail as follows by using a specific application scenario.

### 1. DA manner:

Referring to FIG. 4, assuming that a network side device assigns two PDCHs, namely, a PDCH0 and a PDCH1, to an uplink TBF of a terminal 1, the terminal 1 may send data over two uplink channels, which are respectively an uplink PDCH0 and an uplink PDCH1, and must detect USFs over two downlink channels, which are respectively a downlink PDCH0 and a downlink PDCH1.

The network side device assigns two PDCHs, namely, a PDCH0 and a PDCH1, to an uplink TBF of a terminal 2, the terminal 2 may send data over two uplink channels, which are respectively an uplink PDCH0 and an uplink PDCH1, and must detect USFs over two downlink channels, which are respectively a downlink PDCH0 and a downlink PDCH1.

It should be noted that the uplink PDCHs correspond to the downlink PDCHs, the numbers of radio blocks are the same, and because an uplink radio block is three timeslots later than a corresponding downlink radio block, the uplink and downlink radio blocks are not completely aligned in time.

For the PDCH0, a packet uplink assignment message sent by a base station to the terminal 1 may carry the following information:
{0|1 <USF_TN0:bit(3)>
   <USF_BLOCK_BITMAP0:bit(12)>}
where a value of "USF_TN0:bit(3)" is 001, indicating that a USF assigned to the terminal 1 is "001"; and a value of "USF_BLOCK_BITMAP0:bit(12)" is "100000000000", indicating that the terminal 1 only detects a USF for a radio block B0.

A packet uplink assignment message sent by the base station to the terminal 2 may carry the following information:
{0|1 <USF_TN0: bit(3)>
   <USF_BLOCK_BITMAP0:bit(12)>}
where a value of "USF_TN0:bit(3)" is 001, indicating that a USF assigned to the terminal 2 is "001"; and a value of "USF_BLOCK_BITMAP0:bit(12)" is "000100000000", indicating that the terminal 2 only detects a USF for a radio block B3.

For the PDCH1, a packet uplink assignment message sent by the base station to the terminal 1 may carry the following information:
{0|1 < USF_TN1:bit(3)>
   < USF_BLOCK_BITMAP1:bit(12)>}
where a value of "USF_TN1:bit(3)" is 010, indicating that a USF assigned to the terminal 1 is "010"; and a value of "USF_BLOCK_BITMAP1:bit(12)" is "000100000000", indicating that the terminal 1 only detects a USF for a radio block B3.

A packet uplink assignment message sent by the base station to the terminal 2 may carry the following information:
{0|1 <USF_TN1:bit(3)>
   <USF_BLOCK_BITMAP1:bit(12)>}
where a value of "USF_TN1:bit(3)" is 010, indicating that a USF assigned to the terminal 2 is "010"; and a value of "USF_BLOCK_BITMAP1:bit(12)" is "000000100000", indicating that the terminal 2 only detects a USF for a radio block B6.

The terminal 1 and the terminal 2 may respectively detect downlink radio blocks over the downlink PDCH0 and the downlink PDCH1 simultaneously. With the limitation of the time characteristics, the terminal 1 detects only downlink radio blocks for which a block number is B0 over the downlink PDCH0, and detects only downlink radio blocks for which a block number is B3 over the downlink PDCH1.

The terminal 2 detects downlink radio blocks for which a block number is B3 over the downlink PDCH0 and detects downlink radio blocks for which a block number is B6 over the downlink PDCH1.

The terminal 1, when receiving a downlink radio block B0 over the downlink PDCH0, determines that a bit, in the time characteristic, corresponding to the downlink radio block is "1", which satisfies the time characteristic; detects whether a USF contained in a header of the downlink radio block B0 is 001; and after determining that it is 001, determines that an uplink radio block corresponding to the downlink radio block B0 is an uplink radio block B0 over the uplink PDCH0, so that the terminal 1 may send uplink data or signaling on an uplink radio block B1 following the uplink radio block B0.

The terminal 1, when receiving a downlink radio block B1 over the downlink PDCH0, determines that a bit, in the time characteristic, corresponding to the downlink radio block is "0", which does not satisfy the time characteristic; and does not detect a USF for the downlink radio block B1. Even if a USF contained in a header of the downlink radio block B3 is 001, the terminal 1 still does not send uplink data or signaling on an uplink radio block B2 over the uplink PDCH0.

Operations performed by the terminal 1 over the downlink PDCH1 and the uplink PDCH1 are similar to the above operations, and will not be described herein again.

Meanwhile, the terminal 2, when receiving a downlink radio block B0 over the downlink PDCH0, determines that a bit, in the time characteristic, corresponding to the downlink radio block is "0", which does not satisfy the time characteristic; and does not detect a USF for the downlink radio block B0.

The terminal 2, when receiving a downlink radio block B3 over the downlink PDCH0, determines that a bit, in the time characteristic, corresponding to the downlink radio block is "1", which satisfies the time characteristic; detects whether a USF contained in a header of the downlink radio block B3 is 001; and after determining that it is 001, determines that an uplink radio block corresponding to the downlink radio block B3 is an uplink radio block B3 over the uplink PDCH0, so that the terminal 2 may send uplink data or signaling on an uplink radio block B4 following the uplink radio block B3.

Operations performed by the terminal 2 over the downlink PDCH1 and the uplink PDCH1 are similar to the above operations, and will not be described herein again.

### 2. EDA manner

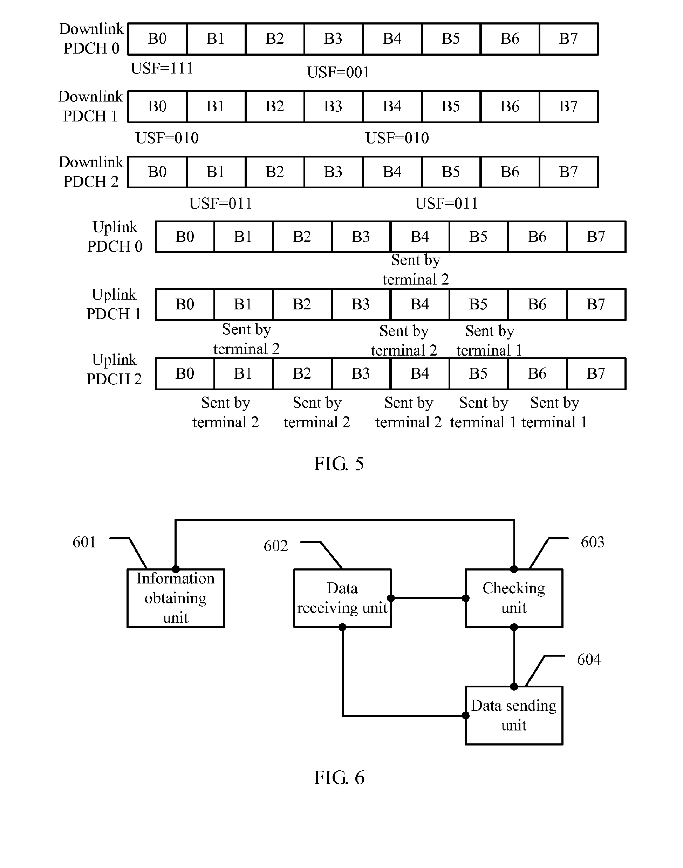

Referring to FIG. 5, assuming that a network side device assigns three PDCHs, namely, a PDCH0, a PDCH1, and a PDCH2, to an uplink TBF of a terminal 1, the terminal 1 may send data over three uplink channels, which are respectively an uplink PDCH0, an uplink PDCH1, and an uplink PDCH2, and must detect USFs over three downlink channels, which are respectively a downlink PDCH0, a downlink PDCH1, and a downlink PDCH2.

The network side device assigns three PDCHs, namely, a PDCH0, a PDCH1, and a PDCH2, to an uplink TBF of a terminal 2, the terminal 2 may send data over three uplink channels, which are respectively an uplink PDCH0, an uplink PDCH1, and an uplink PDCH2, and must detect USFs over three downlink channels, which are respectively a downlink PDCH0, a downlink PDCH1, and a downlink PDCH2.

It should be noted that the uplink PDCHs correspond to the downlink PDCHs, the numbers of radio blocks are the same, and because an uplink radio block is three timeslots later than a corresponding downlink radio block, the uplink and downlink radio blocks are not completely aligned in time.

For the PDCH0, a packet uplink assignment message sent by a base station to the terminal 1 may carry the following information:
{0|1 <USF_TN0:bit(3)>
   <USF_BLOCK_BITMAP0:bit(12)>}
where a value of "USF_TN0:bit(3)" is 001, indicating that a USF assigned to the terminal 1 is "001"; and a value of "USF_BLOCK_BITMAP0:bit(12)" is "100000000000", indicating that the terminal 1 only detects a USF for a radio block B0.

A packet uplink assignment message sent by the base station to the terminal 2 may carry the following information:
{0|1 <USF_TN0:bit(3)>
   <USF_BLOCK_BITMAP0:bit(12)>}
where a value of "USF_TN0:bit(3)" is 001, indicating that a USF assigned to the terminal 2 is "001"; and a value of "USF_BLOCK_BITMAP0:bit(12)" is "000100000000", indicating that the terminal 2 only detects a USF for a radio block B3.

For the PDCH1, a packet uplink assignment message sent by the base station to the terminal 1 may carry the following information:
{0|1 <USF_TN1:bit(3)>
   <USF_BLOCK_BITMAP1:bit(12)>}
where a value of "USF_TN1:bit(3)" is 010, indicating that a USF assigned to the terminal 1 is "010"; and a value of "USF_BLOCK_BITMAP1:bit(12)" is "000010000000", indicating that the terminal 1 only detects a USF for a radio block B4.

A packet uplink assignment message sent by the base station to the terminal 2 may carry the following information:
{0|1 <USF_TN1:bit(3)>
   <USF_BLOCK_BITMAP1:bit(12)>}
where a value of "USF_TN1:bit(3)" is 010, indicating that a USF assigned to the terminal 2 is "010"; and a value of "USF_BLOCK_BITMAP1:bit(12)" is "100000000000", indicating that the terminal 2 only detects a USF for a radio block B0.

For the PDCH2, a packet uplink assignment message sent by a base station to the terminal 1 may carry the following information:
{0|1 <USF_TN2:bit(3)>
   <USF_BLOCK_BITMAP2:bit(12)>}
where a value of "USF_TN1:bit(3)" is 011, indicating that a USF assigned to the terminal 1 is "011"; and a value of "USF_BLOCK_BITMAP1:bit(12)" is "000001000000", indicating that the terminal 1 only detects a USF for a radio block B5.

A packet uplink assignment message sent by the base station to the terminal 2 carries the following information:
{0|1 <USF_TN1:bit(3)>
   <USF_BLOCK_BITMAP1:bit(12)>}
where a value of "USF_TN1:bit(3)" is 011, indicating that a USF assigned to the terminal 2 is "011"; and a value of "USF_BLOCK_BITMAP1:bit(12)" is "010000000000", indicating that the terminal 2 only detects a USF for a radio block B1.

According to features of the EDA manner, the terminal 1 and the terminal 2 detect assigned PDCHs according to PDCH numbers in an ascending order, and as long as a USF which belongs thereto is detected over a downlink PDCH, do not detect following downlink PDCHs.

With the limitation of the time characteristic, the terminal 1 detects only a downlink radio block for which a block number is B0 over the downlink PDCH0.

The terminal 1, when receiving a downlink radio block B0 over the downlink PDCH0, determines that a bit, in the time characteristic, corresponding to the downlink radio block is "1", which satisfies the time characteristic; detects whether a USF contained in a header of the downlink radio block B0 is 001; and if it is not 001, determines that the terminal 1 cannot send uplink data or signaling over the uplink PDCH0.

The terminal 2, when receiving a downlink radio block B3 over the downlink PDCH0, determines that a bit, in the time characteristic, corresponding to the downlink radio block is "1", which satisfies the time characteristic; detects whether a USF contained in a header of the downlink radio block B3 is 001; and if it is 001, determines that an uplink radio block corresponding to the downlink radio block B3 is an uplink radio block B3 over the uplink PDCH0, an uplink radio block B3 over the uplink PDCH1, and an uplink radio block B3 over the uplink PDCH2, so that the terminal 2 may send uplink data or signaling on an uplink radio block B4 over the uplink PDCH0, an uplink radio block B4 over the uplink PDCH1, and an uplink radio block B4 over the uplink PDCH2.

The terminal 1, when receiving a downlink radio block B4 over the downlink PDCH1, determines that a bit, in the time characteristic, corresponding to the downlink radio block is "1", which satisfies the time characteristic; detects whether a USF contained in a header of the downlink radio block B4 is 001; if determining that it is 001, determines that an uplink radio block corresponding to the downlink radio block B4 is an uplink radio block B4 over the uplink PDCH1 and an uplink radio block B4 over the uplink PDCH2, so that the terminal 1 may send uplink data or signaling on an uplink radio block B5 over the uplink PDCH1 and an uplink radio block B5 over the uplink PDCH2.

It should be noted that in this embodiment, FIG. 4 and FIG. 5 shows only radio blocks B0-B7. It may be understood that in an actual application, a 52-multiframe may contain 12 radio blocks such as B0-B11.

Only two terminals are used as an example in the description above. In an actual application, more terminals may be used; specific manners are similar, and no limitation is set herein.

In this embodiment, the network side device assigns only one downlink radio block for which a USF needs to be detected to each terminal over one PDCH. It may be understood that in an actual application, multiple downlink radio blocks for which a USF needs to be detected may be assigned to a terminal over one PDCH by changing a value of the <USF_BLOCK_BITMAP0:bit(12)> parameter. No limitation is set herein.

Based on the above contents, the network side device may assign the same USF to different terminals over one PDCH as long as time characteristics of the terminals are different, and each terminal respectively detects a downlink radio block thereof, so that different terminals are enabled to use the same USF within different time segments within one TBF period, which can reduce access conflicts and access failures, thereby improving reusability of a packet radio channel and success rate of packet radio access.

A terminal according to the embodiments of the present invention is described as follows. Referring to FIG. 6, a terminal according to an embodiment of the present invention includes:
an information obtaining unit 601, configured to obtain a time characteristic of a downlink radio block and an uplink state flag USF assigned to the terminal, where the time characteristic of the downlink radio block is used to indicate a downlink radio block for which the terminal needs to detect a USF;
a data receiving unit 602, configured to receive a downlink radio block, which is sent by a network side device over a downlink data traffic channel PDCH;
a checking unit 603, configured to determine, when a downlink radio block satisfying the time characteristic is received, whether a USF contained in the downlink radio block is the same as the USF assigned to the terminal; and
a data sending unit 604, configured to send, when the checking unit 603 determines that the USF contained in the downlink radio block is the same as the USF assigned to the terminal, uplink data or signaling over an uplink PDCH corresponding to the downlink PDCH.

In this embodiment, the data sending unit 604 is specifically configured to query an uplink radio block, corresponding to the downlink radio block satisfying the time characteristic, over the uplink PDCH, and send the uplink data or signaling within duration of one uplink radio block or within duration of several contiguous uplink radio blocks following the queried uplink radio block.

The association between the units in the terminal according to the present invention is described as follows by using a specific application scenario.

In this embodiment, the information obtaining unit 601 may obtain a packet uplink assignment message from the network side device, where the packet uplink assignment message contains a USF assigned to the terminal and a time characteristic of a downlink radio block, and the time characteristic is used to indicate a downlink radio block for which the terminal needs to detect a USF, that is, on which downlink radio blocks the USF assigned to the terminal is valid.

In this embodiment, the time characteristic of the downlink radio block may be a block number of a downlink radio block (such as a specific radio block B0, B3, or B8 in a 52-multiframe) or a rule for determining a downlink radio block (for example, in a 52-multiframe, a radio block with a remainder 1 after modulo 5 by a block number, a radio block for which a block number is a multiple of 3, a radio block for which a block number is an odd number, a radio block for which a block number is an even number, and the like).

It should be noted that the packet uplink assignment message may be received by the terminal from the network side device each time a TBF with the network side device is established. It may be understood that when the TBF is activated or when the network side device needs to reassign a USF or a time characteristic, a packet uplink assignment message may be sent again for reconfiguration.

In this embodiment, the network side device may be a packet control unit, where the packet control unit may be implemented when being integrated in a base station, a base station controller, or another network element, or be implemented independently in an actual application, which is not limited specifically herein.

After the terminal establishes a TBF connection with the network side device, the data receiving unit 602 may receive a downlink radio block, which is delivered by the network side device over the downlink PDCH.

In this embodiment, the downlink radio block may be repeated according to a specific period. For example, for 12 radio blocks in a 52-multiframe, the repetition is performed continuously by using every 12 radio blocks as a period.

When the data receiving unit 602 receives a downlink radio block satisfying the time characteristic in a process of receiving the downlink radio block sent by the network side device, the checking unit 603 determines whether a USF contained in the downlink radio block is the same as the USF assigned to the terminal, and if yes, triggers the data sending unit 604.

In this embodiment, when the checking unit 603 determines that the USF contained in the downlink radio block is the same as the USF assigned to the terminal, the data sending unit 604 may query an uplink radio block, corresponding to the downlink radio block, over an uplink PDCH in a DA manner or an EDA manner. A specific query process is commonly known to persons skilled in the art and is not limited herein.

The data sending unit 604 may send, after querying the corresponding uplink radio block, the uplink data or signaling within duration of one uplink radio block or within duration of several contiguous uplink radio blocks following the uplink radio block.

In this embodiment, the information obtaining unit 601 can obtain a USF and a time characteristic of a downlink radio block. Only when receiving a downlink radio block satisfying the time characteristic, the checking unit 603 detects a USF for the downlink radio block, and does not detect USFs for all downlink radio blocks. Therefore, one USF may be assigned to multiple different terminals for use within one TBF period as long as time characteristics assigned to different terminals are different, which can reduce access conflicts and access failures, thereby improving reusability of a packet radio channel and success rate of packet radio access.

In addition, the data sending unit 604 may also query an uplink radio block in a DA manner or an EDA manner so as to determine time for the terminal to send the uplink data or signaling, which can improve flexibility of the solution.

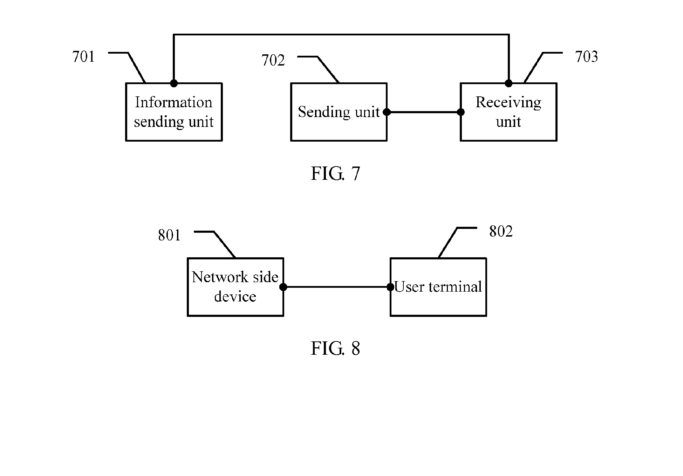

A network side device in the embodiments of the present invention is described as follows. Referring to FIG. 7, a network side device according to an embodiment of the present invention includes:
an information sending unit 701, configured to respectively send a corresponding time characteristic of a downlink radio block and an uplink state flag USF assigned to each terminal to the each terminal, where the time characteristic of the downlink radio block is used to indicate a downlink radio block for which each terminal needs to detect a USF, so that the each terminal determines, when receiving a downlink radio block satisfying the corresponding time characteristic, whether a USF contained in the downlink radio block is the same as the USF assigned to the each terminal, and if yes, sends uplink data or signaling over an uplink PDCH corresponding to a downlink PDCH;
a sending unit 702, configured to send a downlink radio block to the each terminal over the downlink PDCH; and
a receiving unit 703, configured to receive, over the uplink PDCH, the uplink data or signaling sent by the each terminal.

The association between the units in the network side device of the present invention is described as follows by using a specific application scenario.

In this embodiment, the information sending unit 701 may send, when establishing a TBF connection with each terminal, the corresponding time characteristic of the downlink radio block and the USF assigned to each terminal to each terminal by using a packet uplink assignment message.

The meaning of the time characteristic is the same as the meaning of the time characteristic described in the above embodiment shown in FIG. 2, and will not be specifically described herein again.

It should be noted that the information sending unit 701 may assign the same USF to each terminal. For example, a USF assigned to a terminal 1 and a USF assigned to a terminal 2 by the information sending unit 701 may be the same as long as time characteristics of downlink radio blocks thereof are different, so that different terminals are enabled to use the same USF within different time segments within one TBF period.

In this embodiment, the information sending unit 701 may deliver a time characteristic in multiple manners. For example, a bitmap having several bits (USF_BLOCK_BITMAP0:bit (X)) may be added after an original USF parameter to indicate a time characteristic of a downlink radio block. For example, it may be 12 bits, where the 12 bits respectively correspond to 12 radio blocks in a 52-multiframe. When the bit is 1, it indicates that the terminal needs to detect a USF for the radio block, and 0 indicates no detection.

It may be understood that in an actual application, the time characteristic of the downlink radio block may be carried, in more manners, in a message sent by the information sending unit 701 to the terminal, and the specific carrying manner is not limited herein.

After the network side device establishes a TBF connection with the terminal, the sending unit 702 may send a downlink radio block to each terminal over a downlink PDCH, where a header of each downlink radio block contains a USF for each terminal to perform USF detection.

The terminal may send, after determining an uplink radio block according to contents described in the above embodiment shown in FIG. 1 or FIG. 2, uplink data or signaling on a corresponding uplink radio block, and the receiving unit 703 may receive, over an uplink PDCH, the uplink data or signaling sent by each terminal.

In this embodiment, the network side device may be a packet control unit, where the packet control unit may be implemented when being integrated in a base station, a base station controller, or another network element, or be implemented independently in an actual application, which is not limited specifically herein.

The information sending unit 701 may assign the same USF to each terminal. For example, a USF assigned to a terminal 1 and a USF assigned to a terminal 2 by the information sending unit 701 may be the same as long as time characteristics of downlink radio blocks thereof are different, so that different terminals are enabled to use the same USF within different time segments within one TBF period, which can reduce access conflicts and access failures, thereby improving reusability of a packet radio channel and success rate of packet radio access.

A data scheduling system according to the embodiments of the present invention is described as follows. Referring to FIG. 8, a data scheduling system according to an embodiment of the present invention includes:
a network side device 801, configured to respectively send a corresponding time characteristic of a downlink radio block and an uplink state flag USF assigned to each terminal 802 to each terminal 802, where the time characteristic of the downlink radio block is used to indicate a downlink radio block for which each terminal 802 needs to detect a USF; and send a downlink radio block to each terminal 802 over a downlink data traffic channel PDCH; and
a terminal 802, configured to obtain the time characteristic of the downlink radio block and the uplink state flag USF assigned to the terminal sent by the network side device 801; receive the downlink radio block sent by the network side device 801; when a downlink radio block satisfying the time characteristic is received, determine whether a USF contained in the downlink radio block is the same as the USF assigned to the terminal, and if yes, send uplink data or signaling over an uplink PDCH corresponding to the downlink PDCH.

In this embodiment, specific functions and structures of the network side device 801 and the terminal 802 are similar to the contents described in the above embodiments shown in FIG. 6 to FIG. 7, and will not be described herein again. It may be understood that the terminal 802 represents a concept of multiple terminals.

Persons of ordinary skill in the art may understand that all or part of the steps of the methods in the embodiments may be implemented by a program instructing relevant hardware. The program may be stored in a computer readable storage medium. The storage medium may be a read-only memory, a magnetic disk, or an optical disk and the like.

A data scheduling method and system, and a relevant device are described in detail above. Persons of ordinary skill in the art may, based on the ideas of the embodiments of the present invention, make modifications and variations with respect to the implementation and applicability of the present invention. Therefore, the contents of the specification shall not be construed to limit the present invention.

## Claims

1. A data scheduling method, **characterized by** comprising:
obtaining, by a terminal, a time characteristic of a downlink radio block and an uplink state flag, USF, assigned to the terminal, wherein the time characteristic of the downlink radio block is used to indicate a downlink radio block for which the terminal needs to detect a USF;
receiving, by the terminal, a downlink radio block, which is sent by a network side device over a downlink data traffic channel, PDCH; and
when a downlink radio block satisfying the time characteristic is received, determining, by the terminal, whether a USF contained in the downlink radio block is the same as the USF assigned to the terminal, and if yes, sending, by the terminal, uplink data or signaling over an uplink PDCH corresponding to the downlink PDCH.

2. The method according to claim 1, wherein the obtaining, by a terminal, a time characteristic of a downlink radio block and a USF assigned to the terminal comprises:
receiving, by the terminal, a packet uplink assignment message sent by the network side device, wherein the packet uplink assignment message contains the time characteristic of the downlink radio block and the USF assigned to the terminal.

3. The method according to claim 1 or 2, wherein the time characteristic of the downlink radio block is a block number of a downlink radio block or a rule for determining a downlink radio block.

4. A data scheduling method, **characterized by** comprising:
respectively sending a corresponding time characteristic of a downlink radio block and an uplink state flag, USF, assigned to each terminal to the each terminal;
wherein the time characteristic of the downlink radio block is used to indicate a downlink radio block for which the each terminal needs to detect a USF, so that the each terminal determines, when receiving a downlink radio block satisfying the corresponding time characteristic over a downlink data traffic channel, PDCH, whether a USF contained in the downlink radio block is the same as the USF assigned to the each terminal, and if yes, the each terminal sends uplink data or signaling over an uplink PDCH corresponding to the downlink PDCH.

5. The method according to claim 4, wherein the respectively sending a corresponding time characteristic of a downlink radio block and a USF assigned to each terminal to the each terminal comprises:
respectively sending a corresponding packet uplink assignment message to the each terminal, wherein the packet uplink assignment message contains the time characteristic of the downlink radio block respectively corresponding to the each terminal and the USF assigned to the each terminal.

6. The method according to claim 4 or 5, wherein after the respectively sending a corresponding time characteristic of a downlink radio block and an uplink state flag, USF, assigned to each terminal to the each terminal, the method further comprises:
sending a downlink radio block to the each terminal over the downlink PDCH; and
receiving, over the uplink PDCH, the uplink data or signaling sent by the each terminal according to the downlink radio block.

7. The method according to claim 4 or 5, wherein the time characteristic of the downlink radio block is a block number of a downlink radio block or a rule for determining a downlink radio block.

8. A terminal, **characterized by** comprising:
an information obtaining unit, configured to obtain a time characteristic of a downlink radio block and an uplink state flag, USF, assigned to the terminal, wherein the time characteristic of the downlink radio block is used to indicate a downlink radio block for which the terminal needs to detect a USF;
a data receiving unit, configured to receive a downlink radio block, which is sent by a network side device over a downlink data traffic channel, PDCH;
a checking unit, configured to determine, when a downlink radio block satisfying the time characteristic is received, whether a USF contained in the downlink radio block is the same as the USF assigned to the terminal; and
a data sending unit, configured to send, when the checking unit determines that the USF contained in the downlink radio block is the same as the USF assigned to the terminal, uplink data or signaling over an uplink PDCH corresponding to the downlink PDCH.

9. A network side device, **characterized by** comprising:
an information sending unit, configured to respectively send a corresponding time characteristic of a downlink radio block and an uplink state flag, USF, assigned to each terminal to the each terminal;
wherein the time characteristic of the downlink radio block is used to indicate a downlink radio block for which the each terminal needs to detect a USF, so that the each terminal determines, when receiving a downlink radio block satisfying the corresponding time characteristic over a downlink data traffic channel, PDCH, whether a USF contained in the downlink radio block is the same as the USF assigned to the each terminal, and if yes, sends uplink data or signaling over an uplink PDCH corresponding to the downlink PDCH.

10. The network side device according to claim 9, wherein the network side device further comprises:
a sending unit, configured to send a downlink radio block to the each terminal over the downlink PDCH; and
a receiving unit, configured to receive, over the uplink PDCH, the uplink data or signaling sent by the each terminal according to the downlink radio block.
